## Europäisches Patentamt

## European Patent Office

## Office européen des brevets

(11) Veröffentlichungsnummer: **0 127 127**
**A2**

(12) **EUROPÄISCHE PATENTANMELDUNG**

(21) Anmeldenummer: **84105893.6**

(22) Anmeldetag: **23.05.84**

(51) Int. Cl.³: **B 21 C 37/08**

(30) Priorität: **27.05.83 CH 2907/83**

(43) Veröffentlichungstag der Anmeldung:
**05.12.84 Patentblatt 84/49**

(84) Benannte Vertragsstaaten:
**BE DE FR GB IT NL**

(71) Anmelder: **Mattes, Rolf**
**Hesslingerstrasse 11**
**D-7944 Herbertingen(DE)**

(72) Erfinder: **Mattes, Rolf**
**Hesslingerstrasse 11**
**D-7944 Herbertingen(DE)**

(74) Vertreter: **Keller, René, Dr. et al,**
**Patentanwälte Hartmut Keller, Dr. René Keller Postfach 12**
**CH-3000 Bern 7(CH)**

(54) **Verfahren und Einrichtung zur Herstellung eines Rohrs.**

(57) Ein in Längsrichtung gefördertes Band wird durch ein Rinnenwalzwerk (7) zu einer Rinne geformt. Mittels einer Zuführvorrichtung (8) wird ein Kunststoffrohr in die Rinne eingeführt und anschliessend die Rinne mittels eines Rohrwalzwerks (9) um das Kunststoffrohr zu einem Schlitzrohr gebogen. Die Längsränder des Schlitzrohrs werden mittels eines Lasers verschweisst. Vor, an und hinter der Schweissstelle (17) wird das Schlitzrohr durch mit ihm mitlaufende und es umgreifende Mitläufer gefördert, die auf endlosen Zahnriemen (76,77) montiert sind. Das Schlitzrohr wird dabei von den Mitläufern so gehalten, dass die Bandlängsränder an der Schweissstelle genau aneinander anstossen und anschliessend eine Rissbildung in der Schweissnaht vermieden wird.

FIG.3

Verfahren und Einrichtung zur Herstellung eines Rohrs

---

Die Erfindung betrifft ein Verfahren gemäss dem Oberbegriff des Patentanspruchs 1 und eine Einrichtung gemäss dem Oberbegriff des Patentanspruchs 1L

Bei der kontinuierlichen Herstellung von Rohren hat
man bisher das aus einem Band geformte Rohr vor und
hinter der Schweissstelle zwischen Druckrollen hindurchgeführt und die Längsränder mittels einer Rollenelektrode verschweisst. Dabei wurde der Rohrquerschnitt
verformt und es entstanden Schweissgrate, so dass das
verschweisste Rohr anschliessend nachbearbeitet werden
musste, um einen massgerechten, kreisförmigen Querschnitt und eine glatte Schweissnaht zu erhalten. Die
notwendige Nachbearbeitung des verschweissten Rohrs
war aufwendig und nicht oder nur bedingt möglich, wenn
das Verfahren zur Herstellung eines dicht auf einem
Kunststoffrohr sitzenden Metallrohrs verwendet werden
sollte, da die am Kunststoffrohr anliegende Innenseite des Metallrohrs nicht nachbearbeitet werden konnte.

Die Erfindung ist nicht ausschliesslich, aber vorzugsweise auf die Herstellung von Rohren der aus der veröffentlichten europäischen Patentanmeldung Nr.
0 067 919 bekannten Art gerichtet. Solche, aus einem
Kunststoff-Innenrohr, einem Metall-Zwischenrohr und
einem Kunststoff-Aussenrohr bestehende Rohre verbinden die Vorteile der bisherigen Kunststoff- und Metallrohre: Das vorzugsweise aus Aluminium bestehende
Metallrohr ist druckfester als die beiden Kunststoffrohre, und das Ganze ist plastisch biegbar, d.h. es
behält die beim Biegen gegebene Form. Die beiden
Kunststoffrohre verhindern eine Korrosion des Metallrohrs an dessen Innen- und Aussenseite. Bei dem aus
der erwähnten europäischen Patentanmeldung bekannten
Herstellungsverfahren wird das extrudierte Kunststoff-
Innenrohr mit einer Klebschicht versehen und darauf
das Metallband so um das Kunststoff-Innenrohr gerollt,
dass die Längsränder sich überlappen. Die einander
überlappenden Längsränder werden dann mittels eines
Lasers verschweisst. Zum Verschweissen der sich überlappenden Längsränder ist eine hohe Strahlungsleistung
des Lasers erforderlich, wobei die Gefahr besteht,
dass das Kunststoff-Innenrohr thermisch beschädigt
wird und Löcher oder Risse in der Schweissnaht entstehen. Wegen der im Ueberlappungsbereich entstehenden Verdickung hat das Metallrohr ausserdem einen
unregelmässigen Querschnitt und ist deshalb minderwertig.

Der Erfindung liegt die Aufgabe zugrunde, das Schlitzrohr im Bereich der Schweissstelle so zu führen, dass
die Längsränder gratlos und unter Vermeidung von Loch-
oder Rissbildungen in der Schweissnaht mit möglichst
geringer Schweisswärme verschweisst werden können und
dass der Rohrquerschnitt nicht verformt wird.

**0127127**

Die erfindungsgemässe Lösung dieser Aufgabe ist Gegenstand der Patentansprüche 1 und 11. Bevorzugte Ausführungsarten sind in den Patentansprüchen 2 bis 8 und 10 bis 17 umschrieben.

Im folgenden wird anhand der Zeichnung ein Ausführungsbeispiel der Erfindung näher erläutert. Es zeigen:

Fig. 1 eine schematische Darstellung einer Einrichtung zum Ummanteln eines Kunststoffrohrs mit einem Metallrohr, bei dessen Herstellung,

Fig. 2 eine Seitenansicht der Einrichtung von Fig. 1,

Fig. 3 eine Draufsicht auf die Einrichtung von Fig. 1,

Fig. 4 ein Schneide- und Rauhplanierwalzenpaar,

Fig. 5 ein Drückwalzenpaar,

Fig. 6 einen Querschnitt durch einen durch das Drückwalzenpaar von Fig. 5 geformten Längsrand eines Metallbands,

Fig. 7 bis 9 drei Profilwalzenpaare eines Rinnenwalzwerks,

Fig. 10 ein erstes Profilwalzentripel eines Rohrwalzwerks,

Fig. 11 einen teilweisen Querschnitt durch das Profilwalzentripel von Fig. 10,

Fig. 12 und 13 teilweise Querschnitte durch ein zweites und drittes Walzentripel des Rohrwalzwerks,

Fig. 14 ein Walzenpaar einer Spaltführungsvorrichtung,

Fig. 15 einen teilweisen Querschnitt durch das Walzenpaar von Fig. 14, in grösserem Massstab,

Fig. 16 einen Querschnitt durch ein Mitläuferpaar einer Fördervorrichtung, nach der Linie XVI-XVI in Fig. 17,

Fig. 17 eine teilweise Draufsicht auf eine Fördervorrichtung,

Fig. 18 eine vergrösserte Draufsicht auf die Mitläuferpaare der Fördervorrichtung, im Bereich der Schweissstelle, und

Fig. 19 ein Kalibrierwalzenpaar.

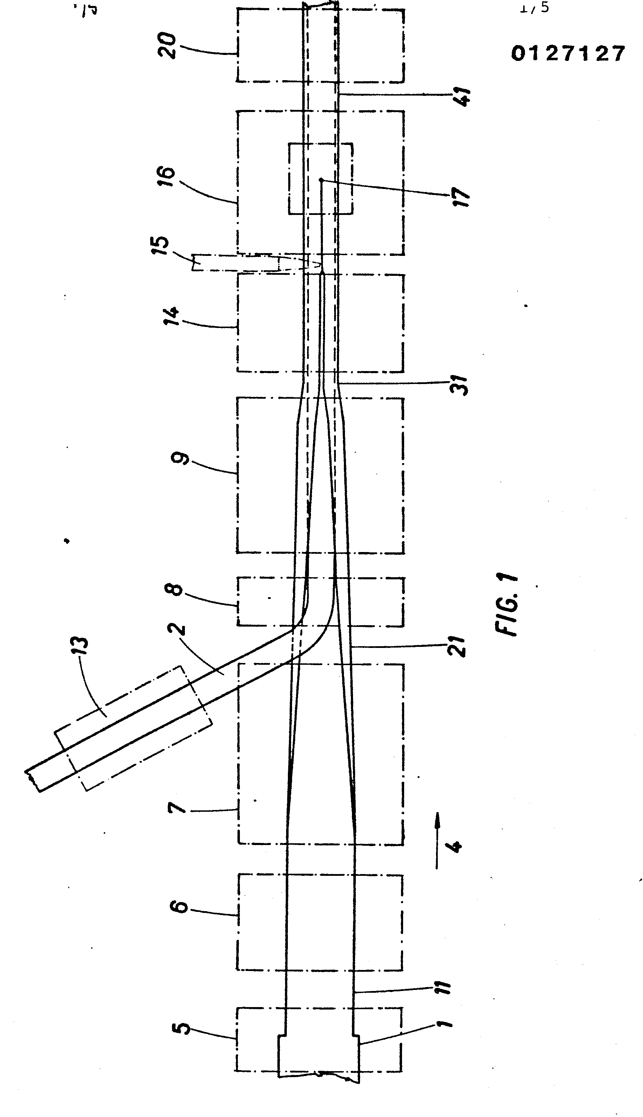

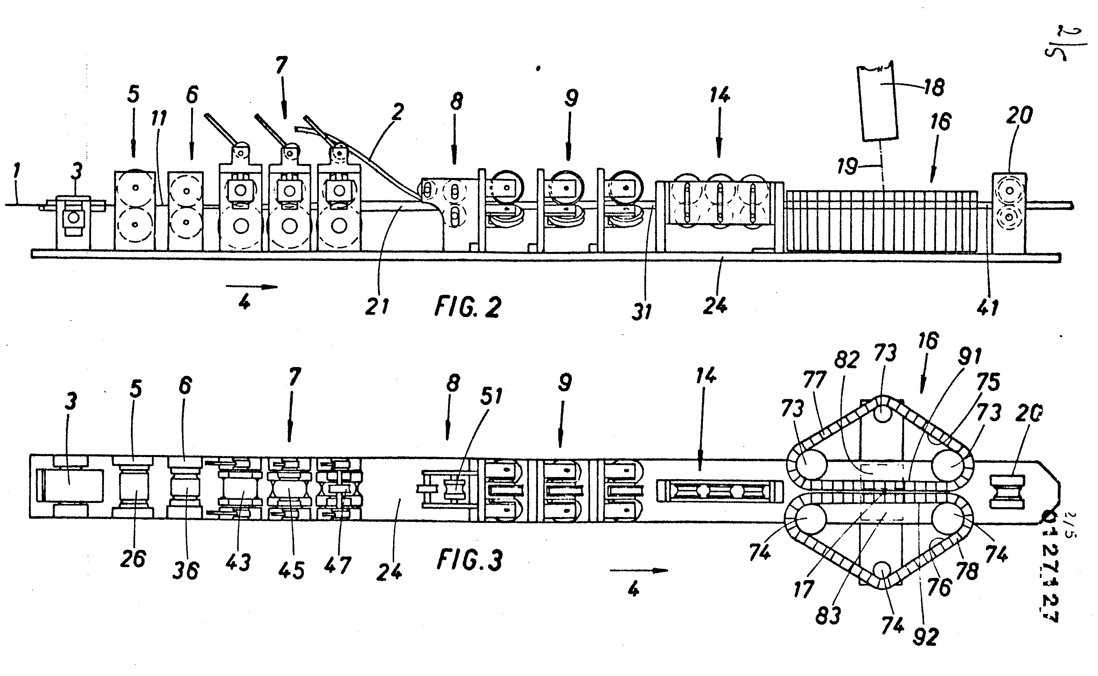

Die dargestellte Einrichtung dient zum Ummanteln eines biegsamen Kunststoffrohrs bzw. -schlauchs mit einem Aluminiumrohr. Von einer (nicht dargestellten) Aluminiumbandrolle wird ein Aluminiumband 1 abgezogen und in einer Verbindungsstation 3 werden jeweils die Bandenden der verbrauchten und der nächsten Bandrolle miteinander verbunden. Das kontinuierliche Metallband wird auf der in Fig. 1 bis 3 dargestellten Rohrformungs- und Schweissstrasse unter Zuführung eines biegsamen Kunststoffrohrs 2 zu einem dieses umschliessenden Rohr geformt und verschweisst. Dabei wird das Kunststoffrohr 2, wie in Fig. 2 angedeutet, schräg von oben zugeführt. (In Fig. 1 ist die Zuführung des Kunststoffrohrs 2 lediglich aus Gründen der einfacheren zeichnerischen Darstellung schräg von der Seite dargestellt.

0127127

Längs der Strasse sind in Förderrichtung 4 nacheinander ein Schneide- und Rauhplanierwalzenpaar 5, welches das Aluminiumband 1 auf eine vorbestimmte Breite schneidet, flachwalzt und Vertiefungen in die Bandoberfläche presst, ein Drückwalzenpaar 6, welches die Längsränder 10 des geschnittenen Bands 11 formt, ein Rinnenwalzwerk 7, welches das Band 11 zu einer Rinne 21 biegt, eine Zuführungsvorrichtung 8 für das Kunststoffrohr 2, ein Rohrwalzwerk 9, welches das rinnenförmige Band 21 zu einem Schlitzrohr 31 formt, eine Spaltführungsvorrichtung 14, welche das Schlitzrohr 31 mit dem Rohrschlitz bzw. Rohrspalt 32 auf die Schweissstelle 17 gerichtet führt, eine Fördervorrichtung 16, welche das Schlitzrohr 31 nach Schliessen des Spalts 32 an einem an der Schweissstelle 17 angeordneten $CO_2$-Laser 18 vorbeiführt, und ein Kalibrierwalzenpaar 20 für das verschweisste Rohr 41 angeordnet. Hinter dem Kalibrierwalzenpaar 20 ist ein (nicht dargestellter) Extruder angeordnet, mit dem ein Kunststoff-Aussenrohr auf das Aluminiumrohr 41 aufgebracht wird.

Zum Fördern des Bands 1, 11 bzw. Rohrs 21, 31 längs der Strasse ist bei der dargestellten Einrichtung lediglich die weiter unten näher beschriebene Fördervorrichtung 16 angetrieben. Die Walzen bzw. Rollen der Vorrichtungen 5, 6, 7, 9 und 14 sind freilaufend, könnten aber selbstverständlich auch mit der Fördergeschwindigkeit der Fördervorrichtung 16 angetrieben sein. Wenn lediglich die Fördervorrichtung 16 angetrieben ist, wird das Band 1 bei der ersten Inbetriebnahme manuell durch die erwähnten Vorrichtungen gezogen und in die Fördervorrichtung 16 eingeführt, worauf deren (nicht dargestellter) Antriebsmotor eingeschaltet wird, der die Treibräder der weiter unten beschriebenen Zahnriemen 75, 76 antreibt.

Die Walz- bzw. Rollengerüste der Vorrichtungen 5, 6, 7, 9, 14 und 20 sind auf einer längs der Strasse verlaufenden Platte 24 befestigt.

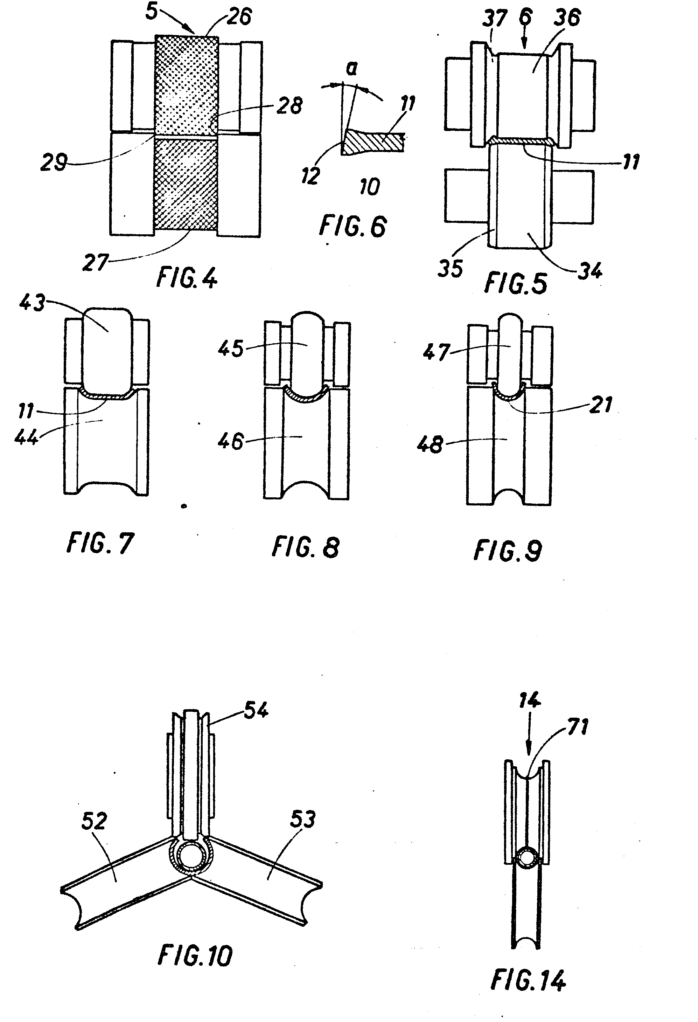

Das in Fig. 4 (ohne das Band 1) dargestellte Schneide-
und Rauhplanierwalzenpaar 5 besteht aus zwei Walzen
26, 27 mit netzartig gerippten, zylindrischen Mantelflächen, welche das Band 1 auf die durch den Walzenspalt gegebene Dicke flachwalzen und in die obere und
untere Fläche des Bands ein netzartiges Rillenmuster
pressen, damit Spannungen im Band vermieden werden
und dieses anschliessend einwandfrei geformt werden
kann. Dabei werden vorzugsweise unter einem Winkel
von 45° zur Bandlängsrichtung 4 verlaufende Rillen in
die Bandoberfläche gepresst; diese könnte aber auch
durch mit einer feinen Zahnung versehene Walzen gerändelt werden. Die Walze 26 hat an ihren beiden Seiten schneidenförmig ausgebildete Schultern 28 und die
Walze 27 ist entsprechend mit ringförmigen Gegenschneiden 29 ausgerüstet, welche das Band 1 auf eine
vorbestimmte Breite schneiden. Die Walzen 26, 27 könnten auch nur zum Rauhplanieren ausgebildet und anschliessend könnte ein separates Schneidwerk vorgesehen sein.

Das in Fig. 5 dargestellte Drückwalzenpaar 6 hat eine
Drückwalze 34 mit in Achsenrichtung konisch nach aussen verjüngten Seitenrändern 35 und eine Gegenwalze
36 mit in Achsenrichtung konisch nach innen verjüngten Seitenwulsten 37, welche die von den Schneiden 28,
29 geschnittenen Längsränder 10 des zwischen ihnen
durchlaufenden Bandes 11 so formen, dass die Schmalseitenflächen 12 (Fig. 6) nicht vertikal sondern etwas
schräg zur Bandebene verlaufen. Dabei werden die
Schmalseitenflächen 12 so zur Bandebene geneigt, dass
sie beim Zusammenstossen in der vollzylindrischen Form
des Bands 11 flächig aneinander anliegen. Zur zeichnerischen Verdeutlichung ist in Fig. 5 der Konuswinkel der Walzenränder 35, 37 übertrieben klein und in Fig. 6 entsprechend der
Winkel a zwischen der Vertikalen zur Bandebene und der Schmalseitenflächen 12 übertrieben gross dargestellt. Bei der Formgebung wird der Längsrand 10 etwas gestaucht und die Schmalseitenfläche 12 dadurch verbreitert, was ein zuverlässigeres Verschweissen der Schmalseiten 12 ermöglicht. (Wegen dieser Verbreiterung ist der Seitenrand 35 konisch nach innen verjüngt.)

Das Vorwalzwerk 7 hat drei in Fig. 7 bis 9 dargestellte Profilwalzenpaare 43/44, 45/46 und 47/48, welche das Band 11 in ihren Walzspalten schrittweise zunächst an den Randbereichen (Walzenpaar 43/44) und anschliessend im mittleren Bereich (Walzenpaare 45/46 und 47/48) zu einer Rinne 21 biegen. Der Walzspalt des ersten Walzenpaars 43/44 erfasst die gesamte Bandbreite und verläuft im mittleren Bereich geradlinig und an den Rändern kreisbogenförmig, annähernd entsprechend der Krümmung des zu formenden Rohrs 41. Die Walzspalte der folgenden Walzenpaare 45/46 und 47/48 erfassen lediglich einen mittleren Bandbereich und sind kreisbogenförmig, wobei der Krümmungsradius des Walzenpaares 45/46 annähernd doppelt so gross und derjenige des Walzenpaars 47/48 lediglich geringfügig grösser als der Krümmungsradius des zu formenden Rohrs 41 ist.

Das mittels eines Extruders hergestellte und an der Aussenseite mit einer Klebschicht versehene Kunststoffrohr 2 wird in einer Kühlvorrichtung 13 gekühlt und durch Führungswalzen 51 der Zuführvorrichtung 8 in das rinnenförmige Band 21 eingeführt. Die (nicht dargestellte) Kühlvorrichtung hat ein doppelwandiges, rohrförmiges Gehäuse, in dessen Ringraum eine wendelförmige, von einem Kühlmittel durchströmte Kühlschlange angeordnet ist. Das koaxial zur Kühlschlange durch das Kühlgehäuse geführte Kunststoffrohr 2 schrumpft infolge der Kühlung etwas und presst sich infolgedessen, und weil der Ausdehnungskoeffizient des verwendeten Kunststoffs grösser als derjenige von Aluminium ist, erst nach der im folgenden beschriebenen Formung und Verschweissung des Aluminiumrohrs 31 dicht an dessen Innenseite an. Infolge dieses Anpressens und der Verklebung durch die Klebschicht wird das Kunststoffrohr 2 vom Rohr 41 mitgenommen, das in Förderrichtung 4 hinter dem Kalibrierwalzenpaar 20 durch (nicht dargestellte), mit der Fördergeschwindigkeit der Führungsvorrichtung 16 angetriebene Mittel weiterbefördert wird, um das Kunststoff-Aussenrohr aufzubringen.

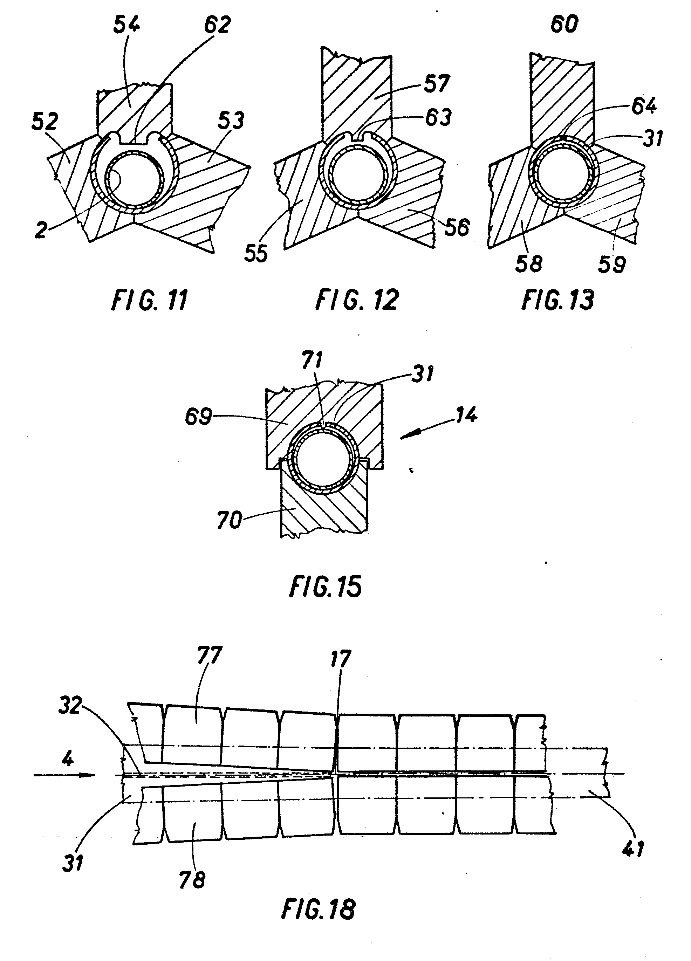

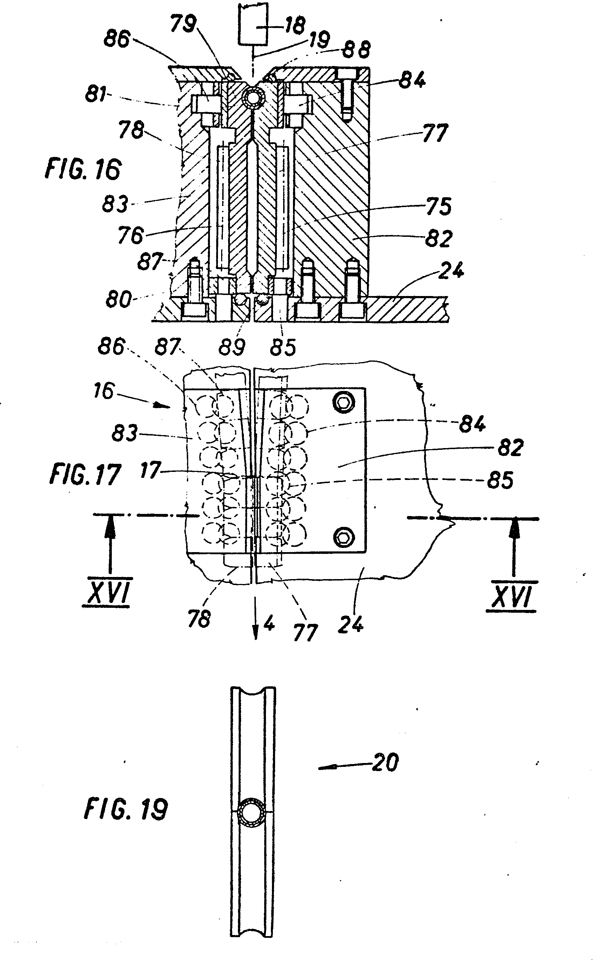

Das rinnenförmige Band 21 wird im Rohrwalzwerk 9 zum das eingeführte Kunststoffrohr 2 umschliessenden Schlitzrohr 31 geformt. Das Rohrwalzwerk 9 hat drei hintereinander angeordnete Walzgerüste, an denen je drei Profilwalzen 52/53/54, 55/56/57 und 58/59/60 gelagert sind (Fig. 11-13). Die drei Profilwalzen jedes Gerüsts rollen mit ihren Umfangsrändern aneinander ab. Die Umfangsflächen der beiden unteren Walzen 52/53, 55/56 und 58/59 sowie die Randbereiche der oberen Walzen 54, 57 und 60 sind kreisförmig nach innengewölbt und die oberen Walzen 54, 57, 60 haben im mittleren Bereich einen Umfangswulst 62, 63, 64. Der Krümmungsradius der Umfangsflächenwölbung und die Breite der Wulste 62 bis 64 nimmt vom Walzentripel 52/53/54 über das Walzentripel 55/56/57 zum Walzentripel 58/59/60 ab, so dass das rinnenförmige Band 21 schrittweise zum Schlitzrohr 31 geformt wird. Dabei sorgen die Wulste 62, 63, 64 dafür, dass der Rohrspalt 32 genau vertikal über der Rohrachse verläuft. Damit diese Lage des Rohrspalts 32 auf dem weiteren Förderweg bis zur Schweissstelle 17 gewährleistet bleibt, ist die Spaltführungsvorrichtung 14 vorgesehen, die drei hintereinander angeordnete Walzenpaare 69, 70 aufweist (Fig. 15), deren der Rohrkrümmung angepasste, konkave Umfangsflächen das Schlitzrohr 31 umschliessen und deren obere Walzen 69 je einen in den Rohrspalt 32 hineingreifenden Umfangswulst 71 aufweisen. Die Wulste 71 der drei Walzen 69 liegen in einer durch die Rohrachse verlaufenden Vertikalebene, so dass der Rohrspalt 32 in Förderrichtung 4 zur Schweissstelle 17 hin gerichtet geführt wird.

Die Fördervorrichtung 16 (Fig. 3 und 16 bis 18) fördert das Rohr 31 auf einem den Laserstrahl 19 kreuzenden Förderabschnitt, d.h. vor, an und hinter der Schweissstelle 17. Sie hat zwei beidseits des Laserstrahls 19 angeordnete, je um ein Treib- und zwei Umlenkzahnräder 73, 74 (Fig. 3) laufende, endlose Zahnriemen 75, 76. An der Riemenaussenseite sind Mitläufer 77, 78 befestigt, die oben und unten über den Zahnriemen 75, 76 hinausragende Teile 79, 80 haben. Die dem Riemen 75, 76 abgewandten Seiten der oberen Teile 79 der Mitläufer 77, 78 haben je eine halbzylindrische, dem Querschnitt des zu verschweissenden Rohrs 41 angepasste Vertiefung 81. Beidseits der Schweissstelle 17 sind an der Innenseite der einander zugewandten Trume der Zahnriemen 75, 76 Lagerböcke 82, 83 angeordnet, an denen je eine obere und untere Stützrollenbahn 84 und 85 sowie 86 und 87 für die oberen und unteren Teile 79, 80 der Mitläufer 77, 78 gelagert sind. Durch die Stützrollenbahnen 84-87, an denen die dem Rohr 31 abgewandten Seiten der oberen und unteren Mitläuferteile 79, 80 laufen, und durch Kugellager 88, 89, an denen der obere und untere Rand der Mitläufer 77, 78 läuft, ist die Bahn und Lage der Mitläufer längs der Lagerböcke 82, 83 bestimmt. Wie Fig. 17 und 18 zeigen, konvergieren die Stütztrollenbahnen 84 und 86 sowie 85 und 87 in Richtung auf die Schweissstelle 17, so dass die Mitläufer 77, 78 den Spalt 32 des Rohrs 31 vor der Schweissstelle 17 allmählich schliessen, wobei die beiden Schmalseiten 12 erst unmittelbar vor bzw. an der Schweissstelle 17 zusammenstossen und dadurch eine Verformung der Schmalseiten 12 auf dem Förderweg vermieden wird. An der Schweissstelle 17 umgreifen die Mitläufer 77, 78 das Rohr 31 fast vollständig, sie haben aber noch einen geringen Abstand voneinander und ihre oberen Randteile greifen gerade so weit über das Rohr 31, dass der fokussierte Laserstrahl 19 ungehindert auf die zu verschweissenden Längsränder 10 trifft. Der $CO_2$-Laser 18 wird kontinuierlich betrieben, der Laserstrahl 19 stark fokussiert und die Laserleistung möglichst klein gewählt, so dass lediglich die unmittelbar aneinander angrenzenden Teile der Längsränder 10 auf die Schweisstemperatur erhitzt und die Gefahr einer Lochbildung in der Schweissnaht sowie einer Beschädigung des Kunststoffrohrs 2 vermieden wird. Unmittelbar nach der Schweissstelle 17 konvergieren die Stützrollenbahnen 84 und 86 sowie 85 und 87 noch geringfügig auf einem kurzen Wegabschnitt, so dass die Mitläufer 77, 78 hinter der Schweissstelle 17 in einem kleineren Abstand voneinander laufen als vor der Schweissstelle und dadurch die in diesem Zeitpunkt noch nicht erstarrte Schweissnaht zusammengedrückt wird, um die Gefahr einer Rissbildung in der Schweissnaht zu vermeiden. Die Stützrollenbahnen 84-87 erstrecken sich hinter der Schweissstelle 17 noch auf einer solchen Länge, dass das verschweisste Rohr 41 durch die Mitläufer 77, 78 während einer für das Abkühlen der Schweissnaht ausreichenden Zeit geführt wird, d.h.

so lange, bis keine Gefahr einer Rissbildung in der
Schweissnaht mehr besteht. Anschliessend divergieren
die Stützrollenbahnen 84 und 86 sowie 85 und 87, so
dass sich die Führungsglieder 77, 78 allmählich vom
verschweissten Rohr 41 lösen. Die Lagerböcke 82, 83
und Stützrollenbahnen 84-87 erstrecken sich nur längs
eines mittleren Bereichs der beiden einander zugewandten Trume 91, 92 (Fig. 3) der Zahnriemen 75, 76
und diese verlaufen ausserhalb der Stützrollenbahnen
84-87 in einem solchen Abstand voneinander, dass die
von ihnen getragenen Mitläufer 77, 78 das Rohr 31, 41
nicht berühren.

Das hinter der Fördervorrichtung 16 angeordnete Kalibrierwalzenpaar 20, dessen Walzen im Querschnitt halbkreisförmig konkave Umfangsflächen haben, dient dazu,
allfällige geringfügige Formabweichungen der unteren
und oberen Rohrseite auszugleichen; es ist jedoch
nicht erforderlich, da das durch die Rohrformungsvorrichtung 9 geformte und durch die Fördervorrichtung
16 geführte Rohr 31, 41 bereits eine für das Aufbringen eines Kunststoff-Aussenrohrs ausreichend massgenaue Form hat.

Je nach der Qualität des für das Band 1 verwendeten
Aluminiummaterials kann sich beim Schweissen das
Problem der Reflexion des Laserstrahls stellen. Um
eine möglichst vollständige Absorption des Laserstrahls zu erreichen und die Laserleistung so gering
wie möglich zu halten, können die Längsränder 10 mit
einer das Laserlicht absorbierenden Schicht überzogen werden, z.B. mittels einer in Fig. 1 zwischen
der Schlitzausrichtungsvorrichtung 14 und der Fördervorrichtung 16 schematisch dargestellten Zuführungsvorrichtung 15 für ein absorbierendes Mittel. Vorzugsweise wird ein die Laserstrahlung absorbierender
Farbstoff mittels einer Farbwalze eines Farbwerks
auf die Längsränder 10 aufgetragen. Dies hat gegenüber einem Aufspritzen der Farbe den Vorteil, dass
die Farbe nicht in den Spalt 32 eindringt.

Selbstverständlich könnte anstelle des Aluminiumbands 1 auch ein anderes Metallband verwendet werden,
Aluminium ist aber für die in der Beschreibungseinleitung erwähnten Kunststoff-Metallrohre besonders
vorteilhaft. Das erfindungsgemässe Verfahren und die
Einrichtung können auch lediglich zur Herstellung einfacher Metallrohre verwendet werden, das erfindungsgemässe Verfahren und die Einrichtung ist aber besonders
im Zusammenhang mit der Herstellung der erwähnten
Kunststoff-Metallrohre vorteilhaft.

Ferner könnten die Mitläufer 77, 78 statt an den Zahnriemen 75, 76 auch an Ketten oder an glatten Riemen
angebracht und beidseits des Förderabschnitts statt
auf den Stützrollenbahnen 84, 85 auch auf Schienenbahnen laufen.

Anstelle oder anschliessend an die Spaltführungsvorrichtung 14 kann ein Messwerk vorgesehen sein, das
Abweichungen der Lage des Spalts 32 bzw. der Längsränder 10 misst und mit einer Steuervorrichtung verbunden ist, welche den Laserstrahl 19 z.B. mittels
eines schwenkbaren Prismas oder Spiegels so lenkt,
dass er den vom Fühler abgetasteten Lageabweichungen
des Spalts 32 bzw. der Längsränder 10 folgt und zwar
mit einer dem Weg zwischen dem Fühler und der
Schweissstelle entsprechenden Zeitverzögerung. Das Messwerk kann einen in den Spalt 32 greifenden Fühler aufweisen, die Lage des Spalts 32 bzw. der
Längsränder könnte aber auch mittels einer Lichtquelle-Photodetektor-Einheit bestimmt werden.


RK/rm-6923
26.5.1983

Patentansprüche

1. Verfahren zur Herstellung eines Rohres (41), bei dem ein in Längsrichtung des herzustellenden Rohrs (41) gefördertes Band (1) zylindrisch gebogen wird, und dessen Längsränder (10) zusammengeschweisst werden, dadurch gekennzeichnet, dass das gebogene Band (31) vor, beim und nach dem Zusammenschweissen der Bandlängsränder (10) von in Förderrichtung (4) mit dem gebogenen Band (31) mitlaufenden, dasselbe wenigstens teilweise umgreifenden Mitläufern (77, 78) in der gebogenen Form gehalten wird.

2. Verfahren nach Anspruch 1, dadurch gekennzeichnet, dass das bis auf einen Spalt (32) zylindrisch gebogene Band (31) von den Mitläufern (77, 78) vor dem Schweissen so gebogen wird, dass die Bandlängsränder (10) stumpf zusammenstossen, und beim Schweissen in der so gebogenen Form gehalten wird.

3. Verfahren nach Anspruch 2, dadurch gekennzeichnet, dass das bis auf einen Spalt (32) zylindrisch gebogene Band (31) von in den Spalt (32) greifenden Organen (71) geführt wird, um den Spalt (32) auf die Schweissstelle (17) auszurichten.

4. Verfahren nach Anspruch 2 oder 3, dadurch gekennzeichnet, dass die Schweissnaht in noch heissem Zustand von den Mitläufern (77, 78) in zum Rohr (41) tangentialer Richtung zusammengepresst oder nachgepresst wird.

5. Verfahren nach einem der Ansprüche 1 bis 4, dadurch gekennzeichnet, dass das Band (1) vor dem Biegen auf die erforderliche Breite bearbeitet und wenigstens
eine Seite des Bandes (1) mit Vertiefungen versehen,
z.B. gerändelt oder gerillt wird.

6. Verfahren nach einem der Ansprüche 1 bis 5, dadurch gekennzeichnet, dass die Bandschmalseiten (12)
derart schräg zur Bandebene geformt werden, dass sie
beim Zusammenstossen parallel sind.

7. Verfahren nach einem der Ansprüche 1 bis 6, zur
Herstellung eines ein Kunststoffrohr (2) aussen umschliessenden Metallrohres (41), bei dem ein Metallband (1) das Kunststoffrohr (2) umschliessend gebogen
und die Bandlängsränder (10) mittels eines Laserstrahls
(19) zusammengeschweisst werden, dadurch gekennzeichnet, dass das Kunststoffrohr (2) schräg zur Förderrichtung (4) des Bandes (1) in das rinnenförmig vorgebogene Band (21) eingeführt und dasselbe (21) bis
zur vollzylindrischen Form (31) weitergebogen wird.

8. Verfahren nach Anspruch 7, dadurch gekennzeichnet,
dass das Kunststoffrohr (2) vor dem Einführen in das
rinnenförmig vorgebogene Band (21) gekühlt wird.

9. Verfahren nach einem der Ansprüche 1 bis 8, bei dem
die Bandlängsränder mittels eines Laserstrahls zusammengeschweisst werden, dadurch gekennzeichnet, dass die
Lage der Längsränder des zylindrisch gebogenen Bands
vor der Schweissstelle bestimmt und der Laserstrahl
entsprechend der bestimmten Lage gelenkt wird.

10. Verfahren nach einem der Ansprüche 1 bis 9, bei dem
die Bandlängsränder mittels eines Laserstrahls zusammengeschweisst werden, dadurch gekennzeichnet, dass ein die
Laserstrahlung absorbierender Farbstoff vor der Schweissstelle auf die Bandlängsränder aufgetragen wird.

11. Einrichtung zur Durchführung des Verfahrens nach Anspruch 1, dadurch gekennzeichnet, dass auf eine das Band (1) bis auf einen Spalt (32) zylindrisch biegende Rohrvorformvorrichtung (7, 9) ein einen Laserstrahl (19) kreuzender Förderabschnitt folgt, an dem einander gegenüber liegende Teile zweier endloser Wege von Mitläufern (77, 78) verlaufen, die mit der Fördergeschwindigkeit des Bandes (1) angetrieben sind und an diesem Abschnitt Paare einander gegenüberliegender Mitläufer (77, 78) bilden, welche das bis auf einen Spalt (32) zylindrisch vorgebogene Band (31) ergreifen, vor dem Erreichen des Laserstrahles (19) zum Vollzylinder biegen, diesen in seiner Form halten, bis die Schweissnaht abgekühlt ist, und sich dann vom hergestellten Rohr (41) lösen.

12. Einrichtung nach Anspruch 11, gekennzeichnet durch zwei längs den beiden endlosen Wegen verlaufende, endlose Riemen (75, 76) oder Ketten, welche die Mitläufer (77, 78) tragen.

13. Einrichtung nach Anspruch 11 oder 12 dadurch gekennzeichnet, dass die Mitläufer (77, 78) annähernd halbzylindrische Vertiefungen (81) zur Aufnahme je annähernd einer Hälfte des Rohrquerschnitts haben, und dass die Mitläufer (77, 78) oder die Riemen (75, 76) bzw. Ketten beidseits des Förderwegabschnitts auf Stützrollen- oder Schienenbahnen (84, 85) laufen.

14. Einrichtung nach Anspruch 13, dadurch gekennzeichnet, dass die Stützrollen- oder Schienenbahnen (84, 85) zur Schweissstelle (17) hin konvergieren und unmittelbar hinter der Schweissstelle (17) in einem kleineren Abstand voneinander verlaufen, um die Schweissnaht beim Abkühlen unter Druck zu halten.

15. Einrichtung nach einem der Ansprüche 11 bis 14,
zur Durchführung des Verfahrens nach Anspruch 5,
gekennzeichnet durch zwei in Förderrichtung (4)
vor der Rohrvorformvorrichtung (7, 9) angeordnete
Rauhplanierwalzen (26, 27), zwischen denen das ebene
Band (1) durchläuft und die an beiden Seiten mit ringförmigen Schneiden (28) und Gegenschneiden (29) ausgerüstet sind.

16. Einrichtung nach einem der Ansprüche 11 bis 15,
zur Durchführung des Verfahrens nach Anspruch 6, gekennzeichnet durch eine Drückrolle (34) und eine Gegenrolle (36) mit konischen Randwulsten (37), welche das zwischen ihnen (34, 36) durchlaufende Band
(11) so drücken, dass dessen Schmalseiten (12) schräg
zur Bandebene verlaufen und nach der Biegung zum
Vollzylinder flächig aneinander anliegen.

17. Einrichtung nach einem der Ansprüche 11 bis 16,
zur Durchführung des Verfahrens nach Anspruch 3, dadurch gekennzeichnet, dass zwischen der Rohrvorformvorrichtung (7, 9) und dem den Laserstrahl (19) kreuzenden Förderabschnitt eine Spaltführungsvorrichtung
(14) angeordnet ist, die mehrere in Förderrichtung (4)
hintereinander angeordnete Walzen (69) mit konkaver,
der Rohrkrümmung angepasster Umfangsfläche und einem
in den Rohrspalt (32) hineingreifenden Umfangswulst
(71) aufweisen, wobei die Umfangswulste (71) der Walzen (69) den Rohrspalt (32) in Förderrichtung (4) ausgerichtet führen.

18. Einrichtung nach einem der Ansprüche 11 bis 17,
zur Durchführung des Verfahrens nach Anspruch 7, dadurch gekennzeichnet, dass die Rohrvorformvorrichtung (7, 9) ein Rinnenwalzwerk (7) mit mehreren aufeinanderfolgenden Profilwalzenpaaren (43-48), die das Metallband (11) in ihren Walzspalten nacheinander, zunächst an den Randbereichen und anschliessend im mittleren Bereich zu einer Rinne (21) formen, und ein Rohrwalzwerk (9) aufweist, dessen Profilwalzen (52-60) an der Aussenseite des rinnenförmigen Metallbandes (21) laufen und dieses bis auf einen Spalt (32) zylindrisch vorbiegen (31), und dass zwischen dem Rinnen- und dem Rohrwalzwerk (7, 9) eine Zuführvorrichtung (8) angeordnet ist, die das biegsame Kunststoffrohr (2) schräg zur Förderrichtung (4) in das rinnenförmige Metallband (21) einführt.

19. Einrichtung nach Anspruch 18, zur Durchführung des Verfahrens nach Anspruch 8, gekennzeichnet durch eine Kühlvorrichtung (13), die das Kunststoffrohr (2) vor der Einführung in das rinnenförmige Metallband (21) kühlt.

RK/eb-6923
16.5.83

FIG. 1

2/5

FIG. 2

FIG. 3

EP 0127127

FIG.4

FIG.6

FIG.5

FIG.7

FIG.8

FIG.9

FIG.10

FIG.14

FIG. 11

FIG. 12

FIG. 13

FIG. 15

FIG. 18

FIG. 16

FIG. 17

XVI          XVI

FIG. 19

20

0127127